# EUROPEAN PATENT SPECIFICATION

(11) **EP 1 693 428 B1**
(45) Date of publication and mention of the grant of the patent: **12.09.2007**
(21) Application number: 05425086.5
(22) Date of filing: 18.02.2005
(51) Int. Cl.: C09D 123/10, C09J 7/02, B32B 27/32

(54) **Adhesive tape produced using a hot-melt technique and having an opaque BOPP backing film**
Klebeband hergestellt durch eine Heissschmelztechnik und welches eine opake BOPP Rückschicht enthält
Bande adhesive produite utilisant une technique thermofusible et ayant un opaque BOPP film de support

(43) Date of publication of application: 23.08.2006
(73) Proprietor: VIBAC S.p.A., I-15040 Ticineto (Alessandria) (IT)
(72) Inventor: De Carolis, Luca, 66050 San Salvo Chieti (IT)
(74) Representative: Gerbino, Angelo

(56) References cited:
- EP-A- 0 397 622
- EP-A- 1 457 315
- US-A- 5 851 610
- US-B1- 6 797 375

## Description

This invention relates to a backing film for adhesive tape, the corresponding process of manufacture and an adhesive tape comprising such backing, produced using a technique of the hot-melt type.

The manufacture of adhesive tapes using a technique of the hot-melt type has become increasingly common recently in comparison with techniques of the "solvent" or "acrylic" type, in which the adhesive is applied to the backing film dissolved in an organic solvent, such as for example hexane or water, respectively.

In order to produce an adhesive tape using a technique of the hot-melt type, an adhesive mass which has been mixed and heated in suitable extruders is applied to a backing film at a temperature which typically lies between 160 and 200°C. This technique is eco-compatible in that it does not require the use of organic solvents and also guarantees higher productivity than techniques of the "solvent" or "acrylic" type as it does not provide for a stage of drying the adhesive mass, which is applied in the molten state. Moreover, the relatively high temperatures required by the hot-melt technique make it necessary to use an adequately heat-resistant backing film, for example one based on biorientated polypropylene (BOPP), ruling out use of the material which has hitherto been most commonly used for the purpose, that is polyvinyl chloride (PVC).

However, a backing film based on BOPP is of a clear colour because of its intrinsic lucidity. Furthermore, its outer surface must be subjected to particular chemical and/or physical treatments so that it can be printed using the normal inks used in flexographic printing. On the other hand, a PVC-based backing film is opaque and is intrinsically printable without the need for any ad hoc surface treatments.

The purpose of this invention is therefore to provide a BOPP-based backing film for adhesive tape of the hot-melt type which also has the advantageous properties just mentioned of a PVC-based backing film.

This object is accomplished through a backing film based on biorientated polypropylene comprising in succession at least a first layer comprising polypropylene or a mixture of polypropylene resins having a melting point of between 150 and 170°C and an MFI (melt flow index) of between 1 and 5 g/10 min at a temperature of 230°C and 2.16 kg, an opaque layer comprising a polyethylene-based resin having a melting point of between 120 and 150°C and an MFI (melt flow index) of between 1 and 5 g/10 min at a temperature of 230°C and 2.16 kg, and a layer of polyamide-resin-based lacquer.

Advantageously the film according to the invention comprises a second layer placed between the first layer and the opaque layer and comprising polypropylene or a mixture of polypropylene resins having a melting point of between 150 and 170°C and an MFI (melt flow index) of between 1 and 5 g/10 min at a temperature of 230°C and 2.16 kg.

Preferably the polyamide resin in the lacquer layer has a Tg of between 95 and 140°C and an acid number of between 2 and 6 to permit good flexographic printing using the normal inks used for that purpose.

A further object of this invention is a process for the production of a backing film for adhesive tape of the type indicated above comprising the stages of:
- coextruding the aforesaid first layer, second layer, if present, and opaque layer,
- treating the outer surface of the opaque layer so that its surface tension has a value of at least 38 N/m,
- applying a mixture of polyamide resin dissolved in a solvent to the said outer surface of the opaque layer, and
- heating the said mixture to cause evaporation of the solvent and the formation of a lacquer layer.

Advantageously the outer surface of the opaque layer is flame treated so that its surface tension has a value of at least 38 N/m. Again advantageously, the concentration by weight of the polyamide resin in the solvent is between 7 and 15% and this solvent is selected from toluene, isopropyl alcohol and their mixtures.

Yet a further object of this invention is an adhesive tape comprising a backing film of the type indicated above, together with an adhesive layer of the hot-melt type adhering to the first layer of backing film.

This adhesive layer is typically based on synthetic rubbers, because the latter have the necessary thermoplasticity properties to permit application of the hot-melt technique, which takes place in a manner which is in itself conventional.

Further advantages and features of this invention will be apparent from the following examples of film compositions provided by way of a non-restrictive example in which the values in µm represent the thicknesses of the various layers.

### EXAMPLE 1

- Adhesive layer:: adhesivity = 550 g/cm
- First layer:: polypropylene homopolymer MFI 2 1.5 µm
- Second layer:: polypropylene homopolymer MFI 3 27 µm
- Opaque layer:: polyethylene homopolymer MFI 3 1.5 µm
- Lacquer layer:: polyamide lacquer with Tg of 115°C and an acid No. of 5 in7% toluene/isopropyl
- alcohol solution: 3.5 g/m²

The adhesivity of the adhesive layer was measured using the following method.

A PSTC (Pressure Sensitive Technical Council) steel plate 137.1 mm (5.4 inches) long and 50.8 mm (2 inches) wide was prepared and the rolls of tape under test were conditioned at 23°C ± 2°C and a relative humidity of 50% ± 5% for 24 hours.

Before each measurement the plate was cleaned with technical hexane and then with acetone using sterile gauzes.

A strip of the adhesive tape under test, which was 1 cm wide and at least 20 cm long, was caused to adhere to the plate, avoiding any air inclusions. Perfect adhesion was guaranteed by 10 successive passes using an automatic rubber roller having a weight of 2 kg at a speed of 300 mm/minute.

The plate was then secured in one of the two clamps of a dynamometer, while an end of the tape was attached to the other clamp. The clamps were then moved apart at a rate of 300 mm/minute with a tape removal angle of 180°.

The mean force applied (measured in g/cm) for detachment of the sample of adhesive from the steel plate is the adhesiveness value of the sample under test.

The test was repeated 3 times using different test specimens for each roll under test. The final result of the test is given by the arithmetic mean of the three values found.

### EXAMPLE 2

- Adhesive layer:: adhesivity = 600 g/cm (measured using the method described above)
- First layer:: polypropylene homopolymer MFI 2 1.5 µm
- Second layer:: polypropylene homopolymer MFI 3 27 µm
- Opaque layer:: polyethylene homopolymer MFI 3 1.5 µm
- Lacquer layer:: polyamide lacquer with T_{g} of 115°C and an acid No. of 5 in 15% toluene/isopropyl alcohol solution 3.5 g/m²

Of course, details of manufacture and embodiments may be varied extensively with respect to what has been described above, purely by way of example, without affecting the principle of the invention and without thereby going beyond its scope.

## Claims

1. Backing film based on biorientated polypropylene for adhesive tape of the hot-melt type, comprising in succession at least one layer comprising polypropylene or a mixture of polypropylene resins having a melting point of between 150 and 170°C and an MFI (melt flow index) of between 1 and 5 g/10 min at a temperature of 230°C and 2.16 kg, an opaque layer comprising a polyethylene-based resin having a melting point of between 120 and 150°C and an MFI (melt flow index) of between 1 and 5 g/10 min at a temperature of 230°C and 2.16 kg, and a layer of polyamide-resin-based lacquer.

2. Film according to claim 1, comprising a second layer placed between the first layer and the opaque layer and comprising polypropylene or a mixture of polypropylene resins having a melting point of between 150 and 170°C and an MFI (melt flow index) of between 1 and 5 g/10 min at a temperature of 230°C and 2.16 kg.

3. Film according to any of the preceding claims, in which the polyamide resin has a T_{g} of between 95 and 140°C and an acid number of between 2 and 6.

4. Process for the production of a backing film for adhesive tape according to any of the preceding claims, comprising the stages of:
- coextruding the aforesaid first layer, second layer, if present, and opaque layer,
- treating the outer surface of the opaque layer so that its surface tension has a value of at least 38 N/m,
- applying a mixture of polyamide resin dissolved in a solvent to the said outer surface of the opaque layer, and
- heating the said mixture to cause evaporation of the solvent and the formation of a lacquer layer.

5. Process according to Claim 4, in which the outer surface of the opaque layer is flame treated so that its surface tension has a value of at least 38 N/m.

6. Process according to Claim 4 or 5, in which the concentration by weight of the said polyamide resin in the solvent is between 7 and 15%.

7. Process according to Claims 4, 5 or 6, in which the said solvent is selected from toluene, isopropyl alcohol and their mixtures.

8. Adhesive tape comprising a backing film according to any of preceding Claims 1 to 3, together with an adhesive layer of the hot-melt type adhering to the first layer of the backing film.

## Patentansprüche

1. Verstärkungsfolie, basierend auf biorientiertem Polypropylen, für ein Klebeband des Schmelzklebetyps, umfassend - nacheinander - mindestens eine Schicht, die Polypropylen oder eine Mischung aus Polypropylenharzen mit einem Schmelzpunkt zwischen 150 und 170°C und einem MFI (Schmelzflussindex) zwischen 1 und 5 g/10 Minuten bei einer Temperatur von 230°C und bei 2,16 kg umfasst, eine undurchsichtige Schicht, die ein Harz auf Polyethylenbasis mit einem Schmelzpunkt zwischen 120 und 150°C und einem MFI (Schmelzflussindex) zwischen 1 und 5 g/10 Minuten bei einer Temperatur von 230°C und bei 2,16 kg umfasst, sowie eine Schicht von Lack auf Polyamidharzbasis.

2. Folie gemäß Anspruch 1, umfassend eine zweite Schicht, die zwischen der ersten Schicht und der undurchsichtigen Schicht platziert ist und Polypropylen oder eine Mischung aus Polypropylenharzen mit einem Schmelzpunkt zwischen 150 und 170°C und einem MFI (Schmelzflussindex) zwischen 1 und 5 g/10 Minuten bei einer Temperatur von 230°C und bei 2,16 kg umfasst.

3. Folie gemäß einem der vorhergehenden Ansprüche, wobei das Polyamidharz eine T_{g} zwischen 95 und 140°C und eine Säurezahl zwischen 2 und 6 aufweist.

4. Verfahren zur Herstellung einer Verstärkungsfolie für ein Klebeband gemäß einem der vorhergehenden Ansprüche, umfassend die folgenden Stufen:
- das Koextrudieren der besagten ersten Schicht, der zweiten Schicht, falls vorhanden, und der undurchsichtigen Schicht,
- das Behandeln der Außenfläche der undurchsichtigen Schicht, so dass deren Oberflächenspannung einen Wert von mindestens 38 N/m hat,
- das Aufbringen einer Mischung von in einem Lösungsmittel gelöstem Polyamidharz auf die Außenfläche der undurchsichtigen Schicht, und
- das Erhitzen der Mischung, um ein Verdampfen des Lösungsmittels und die Bildung einer Lackschicht zu bewirken.

5. Verfahren gemäß Anspruch 4, wobei die Außenfläche der undurchsichtigen Schicht geflämmt wird, so dass ihre Oberflächenspannung einen Wert von mindestens 38 N/m hat.

6. Verfahren gemäß Anspruch 4 oder 5, wobei die Gewichtskonzentration des Polyamidharzes im Lösungsmittel zwischen 7 und 15% beträgt.

7. Verfahren gemäß den Ansprüchen 4, 5 oder 6, wobei das Lösungsmittel aus Toluol, Isopropylalkohol und deren Mischungen ausgewählt wird.

8. Klebeband, umfassend eine Verstärkungsfolie gemäß einem der vorhergehenden Ansprüche 1 bis 3 zusammen mit einer Klebeschicht des Schmelzklebetyps, die an der ersten Schicht der Verstärkungsfolie anhaftet.

## Revendications

1. Film support à base de polypropylène biorienté pour une bande adhésive de type thermocollant, comprenant successivement au moins une couche comprenant un polypropylène ou un mélange de résines à base de polypropylène ayant un point de fusion de 150 à 170 °C et un MFI (indice de fluage) de 1 à 5 g/10 minutes à une température de 230 °C et 2,16 kg, une couche opaque comprenant une résine à base de polyéthylène ayant un point de fusion de 120 à 150 °C et un MFI (indice de fluage) de 1 à 5 g/10 minutes à une température de 230 °C et 2,16 kg, et une couche de laque à base de résine polyamide.

2. Film selon la revendication 1, comprenant une deuxième couche placée entre la première couche et la couche opaque et comprenant du polypropylène ou un mélange de résines à base de polypropylène ayant un point de fusion de 150 à 170 °C et un MFI (indice de fluage) de 1 à 5 g/10 minutes à une température de 230 °C et 2,16 kg.

3. Film selon l'une quelconque des revendications précédentes, dans lequel la résine polyamide a une T_{g} de 95 à 140 °C et un indice d'acidité de 2 à 6.

4. Procédé de production d'un film support pour une bande adhésive selon l'une quelconque des revendications précédentes, comprenant les étapes de :
- coextruder lesdites première couche, deuxième couche, si présente, et couche opaque,
- traiter la surface externe de la couche opaque de sorte que sa tension superficielle ait une valeur d'au moins 38 N/m,
- appliquer un mélange de résine polyamide dissoute dans un solvant à ladite surface externe de la couche opaque, et
- chauffer ledit mélange pour provoquer une évaporation du solvant et la formation d'une couche de laque.

5. Procédé selon la revendication 4, dans lequel la surface externe de la couche opaque est traitée à la flamme de sorte que sa tension superficielle ait une valeur d'au moins 38 N/m.

6. Procédé selon la revendication 4 ou 5, dans lequel la concentration en poids de ladite résine polyamide dans le solvant est de 7 à 15 %.

7. Procédé selon la revendication 4, 5 ou 6, dans lequel ledit solvant est choisi parmi le toluène, l'isopropanol et leurs mélanges.

8. Bande adhésive comprenant un film support selon l'une quelconque des revendications 1 à 3, avec une couche adhésive de type thermocollant adhérant à la première couche du film support.
